## Europäisches Patentamt

## European Patent Office

## Office européen des brevets

(19)

(11) Veröffentlichungsnummer: **0 212 342 B1**

(12) **EUROPÄISCHE PATENTSCHRIFT**

(45) Veröffentlichungstag der Patentschrift:
26.09.90

(51) Int. Cl.⁵: **H04N 11/08**

(21) Anmeldenummer: 86110304.2

(22) Anmeldetag: 25.07.86

(54) Verfahren zur Übertragung von digitalisierten Videosignalen.

(30) Priorität: 31.07.85 DE 3527469

(43) Veröffentlichungstag der Anmeldung:
04.03.87 Patentblatt 87/10

(45) Bekanntmachung des Hinweises auf die Patenterteilung:
26.09.90 Patentblatt 90/39

(84) Benannte Vertragsstaaten:
CH DE IT LI SE

(56) Entgegenhaltungen:
DE-A- 3 300 718

FREQUENZ, Band 38, Nr. 6, Juni 1984, Seiten 131-135, Berlin, DE; H.J. GRALLERT et al.: "Quellencodierung für Übertragung von TV-Signalen in 140-Mbit/s-Kanälen"
NACHRICHTENTECHNISCHE ZEITSCHRIFT, Band 30, Heft 2, Februar 1977, Seiten 163-168, Berlin, DE; H. SCHÖNFELDER: "Zur Konzeption eines Farb-Bildfernsprechsystems

(73) Patentinhaber: Siemens Aktiengesellschaft,
Wittelsbacherplatz 2, D-8000 München 2(DE)

(72) Erfinder: Grallert, Hans-Joachim, Dr.-Ing.,
Tannenfleckstrasse 30, D-8038 Gröbenzell(DE)

## Beschreibung

Die Erfindung betrifft ein Verfahren zur Übertragung von digitalisierten Videosignalen nach dem Oberbegriff des Patentanspruchs 1.

Vor der digitalen Übertragung wird das hier kurz als Videosignal bezeichnete Farbfernsehsignal üblicherweise in ein Luminanzsignal Y und zwei Farbdifferenzsignale U und V zerlegt. Teile des Chrominanzsignals vermischen sich hierbei mit dem Luminanzsignal und verursachen die sogenannten Cross-Luminanz-Störungen. Am Ausgang der Übertragungsstrekke wird durch einen Farb-Coder, z.B. PAL-Coder wieder ein analoges Farbfernsehsignal erzeugt, das im Fernsehempfänger erneut in seine Komponenten bzw. in ein Rot/Grün/Blau-Signal zerlegt wird.

Stimmt nun die am Farb-Coder anliegende Farbträgerfrequenz nicht exakt mit der Farbträgerfrequenz des ursprünglichen Farbfernsehsignals überein, dann entstehen bei der Decodierung im Fernsehempfänger niederfrequente Mischprodukte zwischen dem Farbträger und den Cross-Luminanz-Störungen. Diese Mischprodukte sind als Störmuster in Abhängigkeit vom Bildinhalt deutlich sichtbar.

Zur Vermeidung dieser Störeffekte wird bei analoger Übertragung zu Beginn jeder Fernsehzeile ein Farbträger-Burst (Farb Burst) übertragen, der zur Synchronisierung eines empfangsseitigen Farbträger-Oszillators verwendet wird.

Eine derartige Schaltunganordnung ist in dem Buch "Fernsehtechnik ohne Ballast" von Otto Limann, 11. Auflage, Franzis-Verlag, München auf den Seiten 202 bis 208 beschrieben.

Bei der digitalen Übertragung des Farbfernsehsignals in Anlehnung an die CCIR-Empfehlung 601 erfolgt die Abtastung des Luminanzsignals mit 13,5 MHz und die des Chrominanzsignals mit 6,75 MHz bei sequentieller oder mit 3.375 Mhz bei zeitkontinuierlicher Codierung (siehe auch Frequenz, Band 38, Nr. 6, Juni 1984, Seiten 131–135; H. J. Grallert et al.: "Quellencodierung für Übertragung von TV-Signalen in 140-Mbit/s-Kanälen". Dies führt dazu, daß die Horizontal-Austastlücken für die Bildübertragung benutzt werden und somit nicht mehr für die Übertragung von Farbträgerinformation zur Verfügung stehen. Aus der Nachrichtentechnischen Zeitschrift, Band 30, Heft 2, Februar 1977, Seiten 163–168; H. Schönenfelder: "Zur Konzeption eines Farb-Bildfernsprechsystems" ist es bekannt, die vertikale Austastlücke für einen Synchronisierburst zu benutzen.

Aufgabe der Erfindung ist es, ein einfach realisierbares Verfahren zur digitalen Übertragung von Farbfernsehsignalen anzugeben, bei dem Cross-Luminanz-Störungen nicht als Störmuster sichtbar werden.

Ausgehend von dem eingangs angegebenen Verfahren wird diese Aufgabe durch die im kennzeichnenden Teil des Patentanspruchs 1 angegebenen Merkmale gelöst.

Vorteilhafte Ausbildungen der Erfindung sind in den Unteransprüchen angegeben.

Bei diesem Verfahren ist besonders vorteilhaft, daß alle bisher verwendeten Einrichtungen auf der Sende- und Empfangsseite weiterverwendet werden können. Auf der Sendeseite muß lediglich der Farbträger anstelle des Luminanzsignals abgetastet und codiert werden. Empfangsseitig muß lediglich eine Modifikation bei der Herauslösung der Farbburstschwingungen durchgeführt werden und gegebenenfalls eine Änderung der Zeitkonstante des Regelkreises für den Farbträger-Oszillator erfolgen.

Die Erfindung wird anhand eines Ausführungsbeispiels näher erläutert.

Das hierzu verwendete Blockschaltbild enthält sendeseitig einen Videosignal-Decoder 2 (VS-Decoder), dessen Eingang 1 das analoge Farbfernsehsignal, hier kurz als Videosignal VS bezeichnet, zugeführt wird. Der VS-Decoder weist einen Farbträgerausgang 21 auf und drei weitere Ausgänge 22 bis 24 für das Luminanzsignal Y und die Farbdifferenzsignale U und V. Der Farbträgerausgang 21 und der Luminanzausgang 22 sind wahlweise über einen Umschalter 3 mit einem ersten Eingang eines 140 Mbit/s-Coders 5 verbunden. Die Ausgänge für die Farbdifferenzsignale U und V sind mit weiteren Eingängen des 140 Mbit/s-Coders verbunden. Der Umschalter 3 wird von einer Coder-Steuerung 4 über deren Steuerausgang 41 betätigt. Die Coder-Steuerung 4 ist über Signalleitungen 42 mit dem 140 Mbit/s-Coder verbunden. Über einen Ausgang 51 des 140 Mbit/s-Coders wird das digitalisierte Videosignal DVS über einen Übertragungskanal 6 ausgesendet. Die hierzu benötigten Übertragungs- bzw. Modulationseinrichtungen sind bekannt und brauchen hier nicht mehr erläutert zu werden.

Auf der Empfangsseite wird das digitale Videosignal DVS dem Signaleingang 71 eines 140 Mbit/s-Decoders 7 zugeführt, der es wieder in das analoge Luminanzsignal Y und die zwei Farbdifferenzsignale U und V umsetzt. Diese Signale liegen an den 140 Mbit/s-Decoder-Ausgängen 73 bis 75 an. Über einen zweiten Umschalter 9 ist der Luminanzausgang 73 wahlweise mit dem entsprechenden Eingang eines VS-Coders 10 oder mit dem Eingang 111 eines Farbträger-Generators 11 verbunden, dessen Farbträger F0 über die Farbträgerverbindung 101 dem VS-Coder 10 zugeführt ist. Der zweite Umschalter 9 wird von einer Decoder-Steuerung 8 über einen Steuerausgang 82 betätigt, die über Signalleitungen 72 mit dem 140 Mbit/s-Decoder 7 verbunden ist. Am Ausgang 102 des VS-Coders 10 wird ein Videosignal VS* abgegeben, das bis auf geringe durch die Umsetzung und Übertragung verursachte Abweichungen dem ursprünglichen Videosignal VS entspricht. Dieses Videosignal wird einem aus einem weiteren VS-Decoder 12 und einem Monitor 13 bestehenden Fernsehempfänger zugeführt.

Aus dem ursprünglichen Videosignal VS werden im VS-Decoder 2 in bekannter Weise das Luminanzsignal Y und die beiden Farbdifferenzsignale U und V gewonnen. Außerdem wird der Farbträger F1, der beim PAL-Verfahren eine Frequenz von ca. 4,43 MHz aufweist über Filter ausgekoppelt. Der 140 Mbit/s-Coder 5 enthält zunächst Abtasteinrichtungen für das Luminanz- und die beiden Farbdifferenzsignale. Das Luminanzsignal wird hierzu mit einer ersten Abtastfrequenz von 13,5 MHz und die Farbdifferenzsignale werden beispielsweise mit einer niedrigeren Frequenz von 6,75 MHz abgetastet. Nach der Abtasteinrichtung folgen Analog-Digital-Umsetzer, Codiereinrichtungen und ein Multiplexer, der die digitalisierten Komponenten wieder zu einem digitalen Videosignal DVS zusammenfaßt. Die Einrichtungen für die Farbdifferenzsignale werden hierbei häufig im Zeitmultiplexverfahren genutzt.

Während des Halbbildwechsels wird der Umschalter 3 von der Coder-Steuerung 4 betätigt, die die hierzu benötigten Informationen über die Signalleitungen 42 erhält, und der Abtastvorrichtung für das Luminanzsignal Y der Farbträger F1 zugeführt. Diese tastet den Farbträger mit der üblichen Abtastfrequenz von 13,5 MHz ab. Nach der Analog-Digital-Umsetzung und Codierung wird das digitalisierte Farbträgersignal während des Halbbildwechsels aus gesendet. Da der Farbträger nicht mehr während jeder Fernsehzeile - wenn auch jeweils nur mit wenigen Schwingungen - übertragen wird, erfolgt jetzt die Übertragung des Farbträgers F1 während einer längeren Zeitdauer, die bis zur Zeitspanne einer Fernsehzeile oder sogar mehrerer Fernsehzeilen gehen kann, übertragen.

Empfangsseitig wird das digitale Farbträgersignal wie das Luminanzsignal behandelt und in ein analoges Signal, den Farbträger F1 zurückgewandelt. Hier dient er zum Synchronisieren eines Farbträger-Oszillators im Farbträger-Generator 11. Dies geschieht, wie im eingangs angegebenen Fachbuch "Fernsehtechnik ohne Ballast" beschrieben, in einem Phasenregelkreis. Da ohnehin Signale zur Kenntlichmachung des Halbbildwechsels übertragen werden müssen, werden diese von der Coder-Steuerung 4 bzw. Decoder-Steuerung 8 zur Betätigung des Umschalter 3 während der Übertragung des Farbträgers F1 mitverwendet.

In einer praktischen Schaltungsausführung werden die Umschalter beispielsweise durch Halbleiterelemente realisiert. Insbesondere der zweite Umschalter 9 kann durch eine entsprechende Steuerung des VS-Coders 10 und entsprechenden Schaltungen, einer sogenannten Burst-Austastung, zur Wiedergewinnung des Farbträgers F1 ersetzt werden. Die Frequenz des synchronisierten Farbträgers $F_0$ entspricht wegen des verwendeten Phasenregelkreises exakt der Frequenz des ursprünglichen Farbträgers F1, so daß Störungen durch unterschiedliche Farbträgerfrequenzen ausgeschlossen sind. Es bereitet einem Fachmann keinerlei Schwierigkeiten den Phasenregelkreis im Farbträger-Generator 11 den neuen Erfordernissen anzupassen.

Unter Mitverwendung ohnehin vorhandener Schaltungseinheiten, die nur geringfügig modifiziert werden müssen, ermöglicht die beschriebene Erfindung die ungestörte digitale Übertragung von Videosignalen.

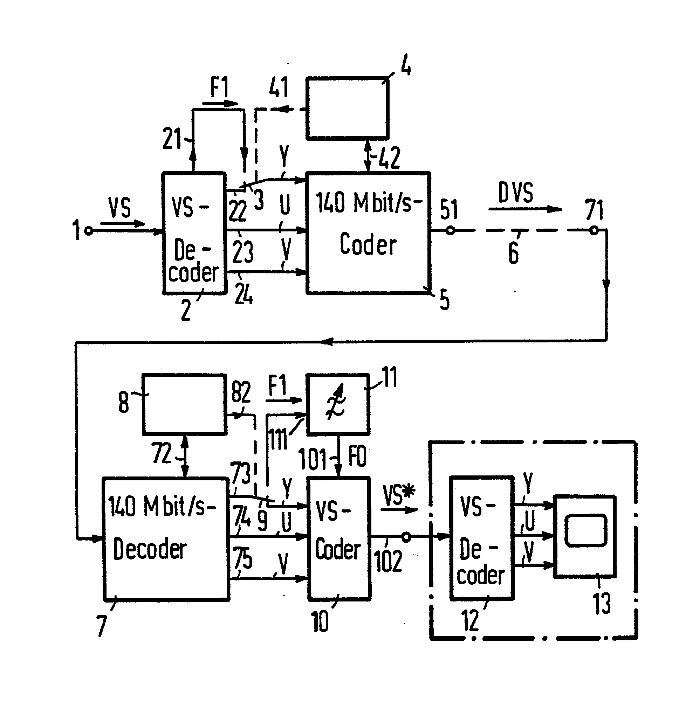

## Patentansprüche

1. Verfahren zur Übertragung von digitalisierten Videosignalen, bei dem sendeseitig ein analoges Videosignal (VS) in ein Luminanzsignal (Y) und zwei Farbdifferenzsignale (U,V) zerlegt wird und das Luminanzsignal (Y) mit einer ersten Abtastfrequenz und die Farbdifferenzsignale (U,V) mit einer niedrigeren Abtastfrequenz abgetastet und in ein digitalisiertes Videosignal (DVS) umgesetzt werden und empfangsseitig das digitalisierte Videosignal (DVS) wieder in ein analoges Videosignal (VS*) umgesetzt wird, **dadurch gekennzeichnet,** daß sendeseitig während des Halbbildwechsels der Farbträger (F1) mit der Abtastfrequenz der Luminanzsignals (Y) abgetastet, in ein digitales Farbträgersignal umgesetzt und übertragen wird und daß empfangsseitig das digitale Farbträgersignal wieder in ein analoges Signal umgesetzt wird, das einen Farbträger-Generator (11) synchronisiert, der den empfangsseitigen Farbträger (F1) erzeugt.

2. Verfahren nach Anspruch 1, **dadurch gekennzeichnet,** daß der Farbträger (F1) für die Dauer einer Fernsehzeile übertragen wird.

3. Verfahren nach Anspruch 1, **dadurch gekennzeichnet,** daß der Farbträger (F1) für die Dauer mehrerer Fernsehzeilen übertragen wird.

4. Verfahren nach Anspruch 1, **dadurch gekennzeichnet,** daß die Abtastfrequenz des Luminanzsignals 13,5 MHZ beträgt.

5. Verfahren nach Anspruch 1, **dadurch gekennzeichnet,** daß die Synchronisierung des Farbträger-Generators (11) durch eine Phasenregelschleife erfolgt.

6. Verfahren nach Anspruch 1, **dadurch gekennzeichnet,** daß eine spezielle Binärkombination der Übertragung des Farbträgers (F1) vorangestellt wird.

7. Verfahren nach Anspruch 1, **dadurch gekennzeichnet,** daß die digitalisierten Abtastwerte des Farbträgers (F1) in 8 Bits breite digitale Signale umgesetzt werden.

## Claims

1. Method of transmitting digitised video signals and including the steps, on the transmitting side, of splitting an analogue video signal (VS) into a luminance signal (Y) and two colour difference signals (U, V), sampling the luminance signal (Y) using a first sampling frequency and sampling the colour difference signals (U, V) using a lower sampling frequency and converting the sampled signals into a digitised video signal (DVS) and, on the receiving side, converting the digitised video signal (DVS) back into an analogue video signal (VS*), characterized in that, on the transmitting side, during the field change-over, the colour carrier (F1) is sampled at the sampling frequency of the luminance signal (Y), is converted into a digital colour carrier signal and transmitted and in that, on the receiving side, the digital colour carrier signal is converted back into an analogue signal, which synchronises a colour carrier generator (11), which generates the colour carrier (F1) on the receiving side.

2. Method according to Claim 1, characterized in that the colour carrier (F1) is transmitted for the duration of one television line.

3. Method according to Claim 1, characterized in that the colour carrier (F1) is transmitted for the duration of a plurality of television lines.

4. Method according to Claim 1, characterized in that the sampling frequency of the luminance signal amounts to 13.5 Mhz.

5. Method according to Claim 1, characterized in that the synchronisation of the colour carrier generator (11) is carrier out by a phase-regulating loop.

6. Method according to Claim 1, characterized in that the transmission of the colour carrier (F1) is preceded by a special binary combination.

7. Method according to Claim 1, characterized in that the digitised sample values of the colour carrier (F1) are converted into 8-bit digital signals.

**Revendications**

1. Procédé pour la transmission de signaux vidéo numérisés, dans lequel on décompose, côté émission, un signal vidéo analogique (VS) en un signal de luminance (Y) et en deux signaux de différence de couleur (U, V), le signal de luminance (Y) étant balayé avec une première fréquence d'échantillonnage et les signaux de différence de couleur (U, V) étant balayés avec une fréquence de balayage plus faible et étant transformés en un signal vidéo numérisé (DVS), alors que du côté réception le signal vidéo numérisé (DVS) est à nouveau transformé en un signal vidéo analogique, caractérisé par le fait que du côté émission et pendant le changement de trame, la sous-porteuse couleur (F1) est balayée avec la fréquence de balayage du signal de luminance (Y), est transformé en un signal numérique de la sous-porteuse couleur qui est transmis, et que côté réception le signal numérique de la sous-porteuse couleur est à nouveau transformé en un signal analogique qui synchronise un générateur de sous-porteuse couleur (11) qui produit la sous-porteuse couleur (F1) du côté réception.

2. Procédé selon la revendication 1, caractérisé par le fait que la sous-porteuse couleur (F1) est transmise pour une durée égale à celle d'une ligne d'image de télévision.

3. Procédé selon la revendication 1, caractérisé par le fait que la sous-porteuse couleur (F1) est transmise pour une durée égale à celle d'une ligne d'image de télévision.

4. Procédé selon la revendication 1, caractérisé par le fait que la fréquence d'échantillonnage du signal de luminance est égale à 13,5 MHz.

5. Procédé selon la revendication 1, caractérisé par le fait que la synchronisation du générateur (11) de la sous-porteuse couleur, est opérée à l'aide d'une boucle de réglage de la phase.

6. Procédé selon la revendication 1, caractérisé par le fait qu'une combinaison binaire particulière précède la transmission de la sous-porteuse couleur (F1).

7. Procédé selon la revendication 1, caractérisé par le fait que les valeurs d'échantillonnage numérisées de la sous-porteuse couleur (F1) sont converties en des signaux numériques à largeur de 8 Bits.